# EUROPEAN PATENT SPECIFICATION

(11) **EP 2 767 199 B1**
(45) Date of publication and mention of the grant of the patent: **21.09.2016**
(21) Application number: 14155411.3
(22) Date of filing: 17.02.2014
(51) Int. Cl.: A47J 36/00, A47J 31/00

(54) **A flash boiler**
Schnelldampfkessel
Chaudière à vaporisation instantanée

(30) Priority: 19.02.2013 IE 20130057
(43) Date of publication of application: 20.08.2014
(73) Proprietor: Moran, Sean Martin, Dublin 16 (IE); Pearson, Paul Drewry, Letterkenny, County Donegal (IE); Stack, Paul Francis, Dublin 16 (IE)
(72) Inventor: Morgan, Sean Martin, Templeogue Dublin 16 (IE); Pearson, Paul Drewry, Letterkenny, County Donegal (IE); Stack, Paul Francis, Dublin 16 (IE)
(74) Representative: Ryan, John Mary

(56) References cited:
- WO-A1-2010/119438

## Description

This invention relates to a flash boiler for a coffee brewing machine and, in particular, to a flash boiler for a pour over, water displacement drip coffee brewing machine.

Pour over water displacement drip coffee brewing machines are designed primarily for the catering trade. Such machines use a holding tank or boiler pre-filled with water. When the machine is turned on, all of the water in the holding tank is brought to near boiling point using a thermostatically-controlled heating element. When water is poured into a top-mounted tray, it descends into a funnel and tube which delivers cold water to the bottom of the boiler. The less-dense hot water in the boiler is displaced out of the tank and into a tube leading to a spray head, where it drips into a brew basket containing ground coffee.

In order to heat the water rapidly in a pour over water displacement drip coffee brewing machine a flash boiler is commonly used. State of the art documents are: WO2010/119438.

Thus, for example, the Filtro Flask Manual Brewer manufactured by Marco Beverage Systems Limited, of 74 Heather Road, Sandyford Business Park, Dublin 18, Ireland, has a brew capacity of 2.21 and incorporates a flash boiler with a power rating of 2.1 kW at 230 V. The flash boiler is located in the brewer housing below a water holding tank, which in turn is located below a spray head for delivering hot water to a brew basket. When the brewer is turned on, water is fed from the water holding tank to an inlet at the bottom of the flash boiler. The water in the boiler is heated rapidly and exits from an outlet located at the top of the boiler and is fed to a spray head, where it drips into a brew basket containing ground coffee.

In this brewer, as the water holding tank is located below the spray head energy is required to get the water up and out of the spray head. This energy comes from the heating of the water in the flash boiler. As the water heats it expands, as steam is generated. This forces the water out of the flash boiler and on to the spray head, for delivery to the brew basket. The temperature of the delivered water is near boiling point. As the coffee brewing proceeds, the water level in the water holding tank declines and consequently the height difference between the water in the tank and the spray head increases.

Towards the end of a brew, more energy is required in order to deliver the water from the flash boiler to the spray head and thus more energy is required in the form of heat. Thus, the water being delivered from the spray head is approaching boiling point, which has adverse results on the quality of the brewed coffee. It is generally accepted that a water temperature of 96 °C is ideal and that a water temperature above 96 °C results in a deterioration in the organoleptic characteristics of the brewed coffee.

It is an object of the present invention to overcome the disadvantages of the flash boiler for use as hereinbefore described.

Thus, the invention provides a flash boiler for a pour over water displacement drip coffee brewing machine, which flash boiler is adapted to deliver hot water to a spray head of the brewing machine, the flash boiler comprising a housing, a heating coil within the housing, an upper cold water inlet connectable to a water holding tank in the coffee brewing machine, and a hot water outlet, both the upper cold water inlet and the hot water outlet being located at the upper end of the housing as it is orientated, in use, such that a quantity of cold water entering the housing through the upper cold water inlet mixes with the hot water exiting the housing through the hot water outlet, which quantity of water is sufficient to maintain the temperature of the water at the spray head at 96 °C +/- 1.0 °C.

An advantage of the flash boiler according to the invention is that the water temperature at the spray head is maintained at a temperature at which there is efficient extraction from the coffee grounds, while minimising the extraction of oils, which impart a bitter taste to the coffee. This is achieved at low cost by mixing some cold inlet water with the hot water exiting the flash boiler.

Preferably, the temperature of the water at the spray head is maintained at 96 °C +/- 0.5 °C.

Water above 96 °C is generally accepted in the coffee brewing industry as being detrimental to the quality of the coffee output so there is an advantage to maintaining the temperature of the water at the spray head to close to the industry desired temperature of 96 °C.

In one embodiment of the invention, the upper cold water inlet is connectable to a non- return valve, which non-return valve is locatable between the upper cold water inlet and the water holding tank.

In the prior-art flash boiler, the volume of water entering the boiler compared to that exiting the boiler is restricted by choice of a smaller diameter orifice. However, since the hot water outlet of the flash boiler in accordance with the invention is located at the upper end of the housing together with the upper cold water inlet, any tendency for hot water to return through the cold water inlet is prevented by use of the non-return valve.

In one embodiment of the invention, a lower cold water inlet is located at the lower end of the housing, as it is orientated, in use, which lower cold water inlet is selectable in a coffee brewer, where the head of water in the water holding tank, above the upper cold water inlet, is insufficient to deliver the hot water to the spray head.

An advantage of the flash boiler having both an upper and a lower cold water inlet is that the appropriate inlet may be utilised for a particular coffee brewing machine, with the unused inlet being blanked off. This results in a saving in manufacturing costs as the one flash boiler will suit two differing coffee brewing machines.

The invention will be further illustrated by the following description of an embodiment thereof, given by way of example only with reference to the accompanying drawings in which:
Fig. 1 is a perspective view of a flash boiler in accordance with the invention;
Fig. 2 is a plan view of the flash boiler of Fig. 1; and
Fig. 3 is a cross-section on line III-III of Fig. 2.

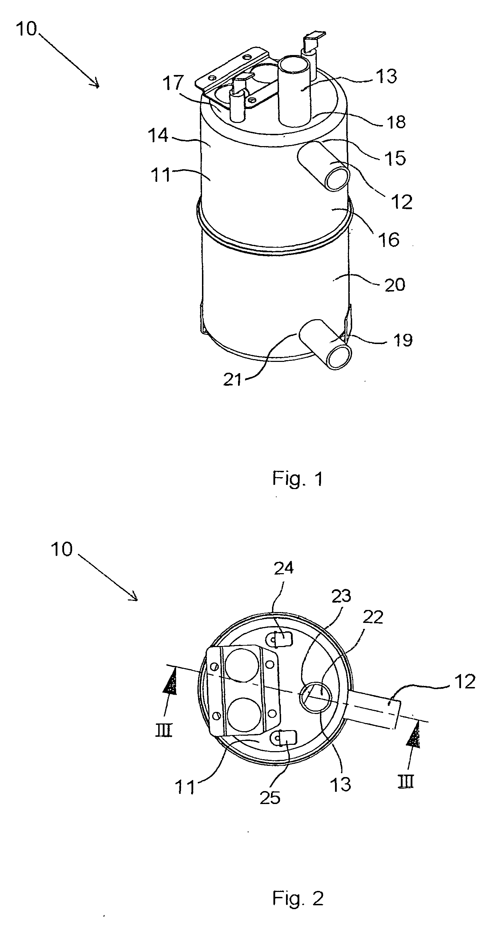

Referring to Fig.1, there is illustrated generally at 10, a flash boiler for a pour over water displacement drip coffee brewing machine, which flash boiler is adapted to deliver hot water to a spray head of the brewing machine according to the invention. The flash boiler 10 comprises a housing 11, a heating coil (not shown) within the housing 11, an upper cold water inlet 12 connectable to a water holding tank in the coffee brewing machine, and a hot water outlet 13, both the upper cold water inlet 12 and the hot water outlet 13 being located at upper end 14 of the housing 11 as it is orientated, in use, such that a quantity of cold water entering the housing 11 through the upper cold water inlet 12 mixes with the hot water exiting the housing 11 through the hot water outlet 13, which quantity of water is sufficient to maintain the temperature of the water at the spray head at 96 °C +/- 1.0 °C.

The upper cold water inlet 12 is located, at the upper end 14 of the housing 11, at position 15 on an upper side wall 16 of the housing 11 and the hot water outlet 13 is located on top surface 17 of the housing 11 at position 18.

A lower cold water inlet 19 is located on a lower side wall 20 of the housing 11 at position 21.

The lower cold water inlet 19 is selectable in a coffee brewer, where the head of water in the water holding tank, above the upper cold water inlet 12, is insufficient to deliver the hot water to the spray head.

In practice, the appropriate cold water inlet 12, 19 is chosen for a particular coffee brewing machine, with the unused inlet 12, 19 being blanked off. This results in a saving in manufacturing costs as the one flash boiler 10 will suit two differing coffee brewing machines.

Referring to Fig. 2, the flash boiler 10 is seen from above. The upper cold water inlet accesses interior space 22 of the housing 11 adjacent the hot water outlet 13, through which part of the heating coil 23 can be seen. Terminals 24, 25 connect the heating coil 23 to a power supply.

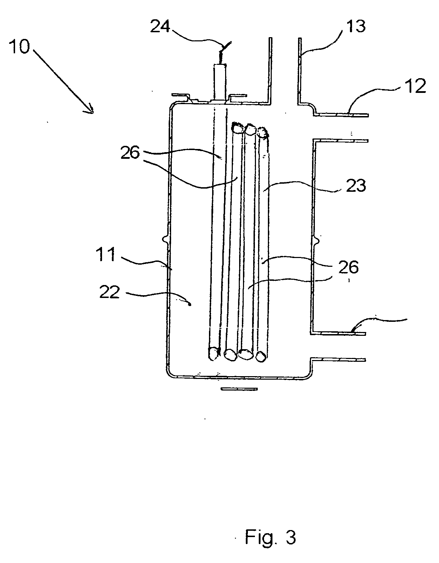

Referring to Fig. 3, it can be seen that loops 26 of the heating coil 23 take up much of the inner space 22 of the housing 11.

Referring to Figs. 1 to 3, the flash boiler 10 has a power rating of 2.1 kW at 230 V. Thus, in use, water introduced into the inner space 22 through the upper cold water inlet 12 will heat up rapidly to near boiling point. The heated water expands and exits the inner space 22 through the hot water outlet 13. This allows more cold water to enter through the upper cold water inlet 12. Some of this freshly introduced cold water mixes with the nearly boiling water as it exits the inner space causing a reduction in the water temperature such that the temperature of the water at the spray head is maintained at 96 °C +/- 0.5 °C, which is close to the industry desired temperature of 96 °C.

## Claims

1. A flash boiler (10) for a pour over water displacement drip coffee brewing machine, which flash boiler (10) is adapted to deliver hot water to a spray head of the brewing machine, the flash boiler (10) comprising a housing (11), a heating coil within the housing (11), an upper cold water inlet (12) connectable to a water holding tank in the coffee brewing machine, and a hot water outlet (13), **characterized in that** both the upper cold water inlet (12) and the hot water outlet (13) being located at the upper end (14) of the housing (11) as it is orientated, in use, such that a quantity of cold water entering the housing (11) through the upper cold water inlet (12) mixes with the hot water exiting the housing (11) through the hot water outlet (13), which quantity of water is sufficient to maintain the temperature of the water at the spray head at 96 °C +/- 1.0 °C.

2. A flash boiler according to Claim 1, wherein the temperature of the water at the spray head is maintained at 96 °C +/- 0.5 °C.

3. A flash boiler according to Claim 1 or 2, wherein the upper cold water inlet (12) is connectable to a non- return valve, which non-return valve is locatable between the upper cold water inlet (12) and the water holding tank.

4. A flash boiler according to any preceding claim, wherein a lower cold water inlet (19) is located at the lower end (21) of the housing (11), as it is orientated, in use, which lower cold water inlet (19) is selectable in a coffee brewer, where the head of water in the water holding tank, above the upper cold water inlet (12) is insufficient to deliver the hot water to the spray head.

## Patentansprüche

1. Schnelldampfkessel (10) für eine Überschwallwasserverdrängungstropfkaffeebraumaschine, wobei der Schnelldampfkessel (10) angepasst ist, um zu einem Sprühkopf der Braumaschine heißes Wasser zuzuführen, wobei der Schnelldampfkessel (10) ein Gehäuse (11) umfasst, eine Heizspule in dem Gehäuse (11), einen oberen Kaltwassereinlass (12), welcher mit einem Wassertank in der Kaffeebraumaschine verbindbar ist, und einen Heißwasserauslass (13), **dadurch gekennzeichnet, dass** sowohl der obere Kaltwassereinlass (12) als auch der Heißwasserauslass (13) an dem oberen Ende (14) des Gehäuses (11), wenn es wie im Betrieb orientiert ist, angeordnet sind, so dass eine Menge kalten Wassers, die durch den oberen Kaltwassereinlass (12) in das Gehäuse (11) eintritt, sich mit dem aus dem Gehäuse (11) durch den Heißwasserauslass (13) austretenden heißen Wasser vermischt, wobei die Menge des Wassers ausreichend ist, um die Temperatur des Wassers am Sprühkopf bei 96 °C ± 1,0 °C zu halten.

2. Schnelldampfkessel nach Anspruch 1, wobei die Temperatur des Wassers am Sprühkopf bei 96 °C ± 0,5 °C gehalten ist.

3. Schnelldampfkessel nach Anspruch 1 oder 2, wobei der obere Kaltwassereinlass (12) mit einem Sperrventil verbindbar ist, wobei das Sperrventil zwischen dem oberen Kaltwassereinlass (12) und dem Wassertank anordenbar ist.

4. Schnelldampfkessel nach einem beliebigen vorhergehenden Anspruch, wobei ein unterer Kaltwassereinlass (19) an dem unteren Ende (21) des Gehäuses (11), wenn es wie im Betrieb orientiert ist, angeordnet ist, wobei der untere Kaltwassereinlass (19) in einer Kaffeebrauvorrichtung auswählbar ist, wenn die Wassersäule in dem Wassertank über dem oberen Kaltwassereinlass (12) nicht ausreichend ist, um dem Sprühkopf das heiße Wasser zuzuführen.

## Revendications

1. Chaudière à vaporisation instantanée (10) destinée à une machine de brassage de café filtre à déplacement d'eau pour infusion, laquelle chaudière à vaporisation instantanée (10) est conçue pour délivrer de l'eau chaude à une tête de pulvérisation de la machine de brassage, la chaudière à vaporisation instantanée (10) comprenant un logement (11), une bobine de chauffage à l'intérieur du logement (11), une entrée d'eau froide supérieure (12) pouvant être reliée à un réservoir de stockage d'eau dans la machine de brassage de café, et une sortie d'eau chaude (13), **caractérisée en ce que** l'entrée d'eau froide supérieure (12) et la sortie d'eau chaude (13) sont toutes deux situées au niveau de l'extrémité supérieure (14) du logement (11) lorsqu'il est orienté, en cours d'utilisation, de telle sorte qu'une quantité d'eau froide entrant dans le logement (11) par le biais de l'entrée d'eau froide supérieure (12) se mélange avec l'eau chaude sortant du logement (11) par le biais de la sortie d'eau chaude (13), laquelle quantité d'eau est suffisante pour maintenir la température de l'eau au niveau de la tête de pulvérisation à 96 °C +/-1,0 °C.

2. Chaudière à vaporisation instantanée selon la revendication 1, dans laquelle la température de l'eau au niveau de la tête de pulvérisation est maintenue à 96 °C +/- 0,5 °C.

3. Chaudière à vaporisation instantanée selon la revendication 1 ou 2, dans laquelle l'entrée d'eau froide supérieure (12) peut être reliée à un clapet de non-retour, lequel clapet de non-retour peut être positionné entre l'entrée d'eau froide supérieure (12) et le réservoir de stockage d'eau.

4. Chaudière à vaporisation instantanée selon l'une quelconque des revendications précédentes, dans laquelle une entrée d'eau froide inférieure (19) est positionnée au niveau de l'extrémité inférieure (21) du logement (11), lorsqu'il est orienté, en cours d'utilisation, laquelle entrée d'eau froide inférieure (19) peut être sélectionnée dans un dispositif de brassage de café, lorsque la colonne d'eau dans le réservoir de stockage d'eau, au-dessus de l'entrée d'eau froide supérieure (12) est insuffisante pour délivrer de l'eau chaude à la tête de pulvérisation.
